(19) Europäisches Patentamt
European Patent Office
Office européen des brevets

(11) **EP 1 918 734 A1**

(12) **EUROPEAN PATENT APPLICATION**

(43) Date of publication:
**07.05.2008 Bulletin 2008/19**

(51) Int Cl.:
**G01S 7/41** (2006.01)   **G01S 7/42** (2006.01)
**G01S 13/48** (2006.01)   **H01Q 21/08** (2006.01)

(21) Application number: **07110771.8**

(22) Date of filing: **21.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **04.11.2006 GB 0621987**

(71) Applicant: **ROKE MANOR RESEARCH LIMITED Romsey,
Hampshire SO51 0ZN (GB)**

(72) Inventor: **Johnson, David Antony
Romsey, Hampshire SO51 5AP (GB)**

(74) Representative: **Morgan, Marc
Siemens AG,
Postfach 22 16 34
80506 Munich (DE)**

(54) **A multiple input multiple output RADAR system**

(57)   In the apparatus a RADAR transmitter and receiver array are provided which see different aspects of a target by virtue of their configuration. The transmitter transmits RADAR signals based on mutually orthogonal codes. There are two preferred forms of transmitter and receiver arrays.

FIG 1

**Description**

This invention relates to a Multiplt Input Multiple Output Radio Detection And Ranging (MIMO) RADAR system.

MIMO RADAR systems transmit a number of beams at what is considered to be a point target and receive back scattered radiation to determine the presence and range of a target. In such systems the target has been considered to be a point scatter. Unfortunately, this assumption is largely incorrect since most targets act in fact like a grouping of scatterers. This is caused, for example, in the case of a ship by different features of the structure such as the hull, bridge and guns. In the case of aircraft the scatters may be the fuselage, the wings, engines and tail. A group of scatterers cause constructive and destructive interference which makes the composite backscattered signal fluctuate as the target moves. It is therefore difficult to detect the target when destructive interference causes the backscattered signal to have a low intensity or null.

The present invention arose in an attempt to alleviate this problem.

According to the invention there is provided a MIMO RADAR system comprising a transmitter array of transmitting elements and means to provide to the transmitting elements RF signals for illumination of a target; and a receiver array of receiving elements for receiving backscattered RF signals from the target characterised in that the elements of the at least one of the transmitter and receiver arrays are spaced apart by a distance $\Delta d$ substantially in accordance with the relationship

$$\Delta d > R.\frac{\lambda_c}{\Delta x}$$

where R is the slant range at which detection is to be made, $\lambda_c$ is the carrier wavelength and $\Delta x$ is a dimension of the target.

By making the element separation in accordance with this relationship it has been found that the receiver section can separate the received signals from each transmission source and combine them on the basis of their received power to reduce the degradation in performance due to the fluctuations. Thus by utilising the invention significant processing gain is achievable.

By utilitsing the invention the signal to noise processing gain achievable is greater if array elements at both the transmitter and receiver are spaced by a distance $\Delta d$ (as defined above) and the receiver and transmitter arrays are arranged to see different aspects of the target.

A specific embodiment of the invention will now be described by way of example only with reference to the drawings in which:

Figure 1 shows a RADAR system in accordance with the invention having a transmitter section and a receiver section with a target being illuminated by signals transmitted from the transmitter section to backscatter signals to the receiver section;

Figures 2 and 3 show the transmitter section and receiver sections in more detail; and

Figures 4 and 5 show two alternative transmitter and receiver arrays.

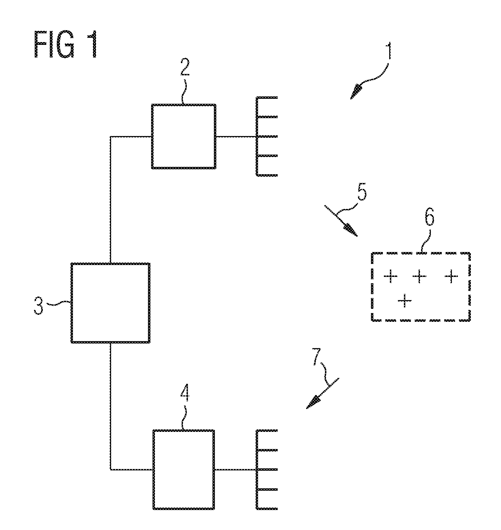

With reference to figure 1 there is shown a RADAR system 1 comprising a transmitter section 2, a controller 3 and a receiver section 4. The controller 3 is operably coupled to both sections to control their operation and to interpret the output of the receiver section 4. The transmitter section 2 transmits RADAR signals 5 in the direction of a target 6 to be detected.

The target 6 includes a number of scattering points represented by the crosses. These backscatter radiation 7 towards the receiver section 4.

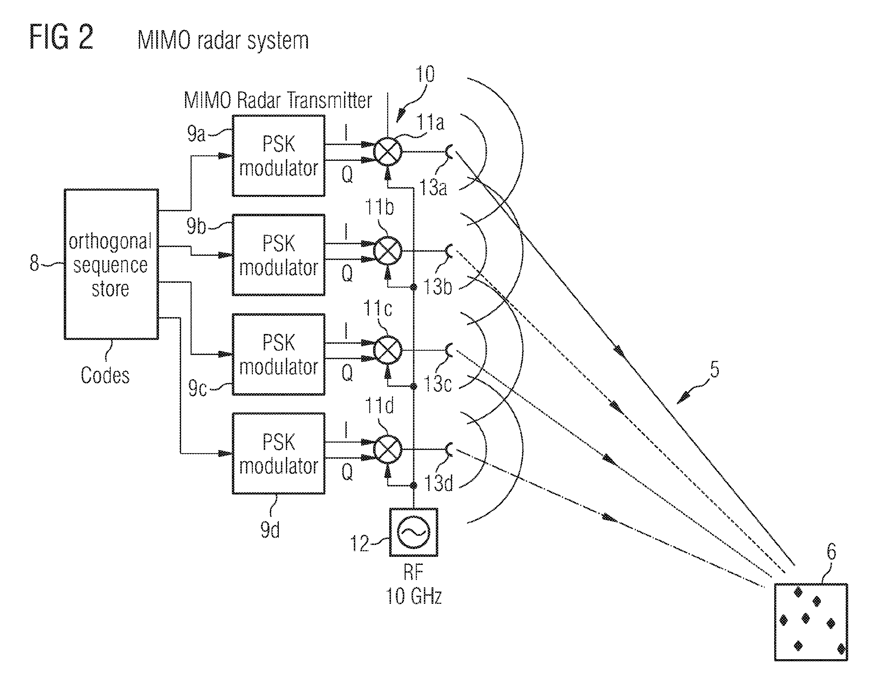

The transmitter section 2 is shown in greater detail in figure 2. It includes an orthogonal sequence store 8 which holds four orthogonal codes. Each code is chosen to have good (low) cross correlation properties with the others. Each code is applied to a respective phase shift key modulator 9a to 9d to provide respective baseband phase and quadrature signals 10.

The baseband phase and quadrature signals 10 are applied to respective frequency up converters 11a to 11d having an RF frequency source 12 operating at 10GHz. The up-converted RF signals are passed to respective antenna elements 13a to 13d. The antenna elements 13a to 13d may be dipoles or sub-arrays of elements. The radiated signals are directed to the target 6 by moving the elements. Because the codes are orthogonal the radiated signals 5 are distinct and non-interfering.

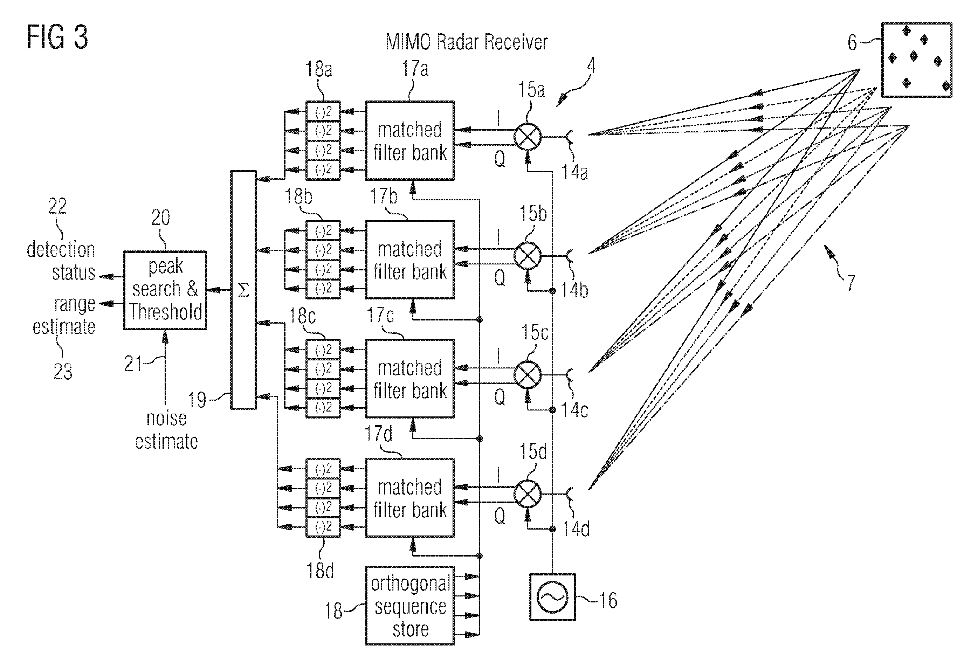

The receiver section is shown in greater detail in figure 3. It includes an array of antenna receiving elements 14a to 14d these may be also be dipoles or sub-arrays. These receive the backscattered radiation 7 from the target 6 and the received signals are downconverted to baseband using respective down-converters 15a to 15d and RF frequency source 16. The phase and quadrature signals are input to respective matched filter banks 17a to 17d. The filters filter on the code sequences of the transmitted signals provided from an orthogonal sequence store 18.

The filtered outputs from the matched filter banks 17a to 17d are output to squaring means 18a to 18d. The squared signals are summed together in a summer 19 and the summed output passed to a peak search and threshold detector 20. This examines the signal envelope utilising a noise estimate reference 21. When the summed signal exceeds the noise estimate and a peak identified a target detection flag is set and a range estimate provided on outputs 22 and 23.

The preferred separation for the antenna elements for the transmitter section $\Delta d$ is substantially in

accordance with the relationship $\Delta d > R.\dfrac{\lambda_c}{\Delta x}$ where R is the slant range at which detection is to be made, $\lambda_c$ is the carrier wavelength and $\Delta x$ is a dimension of the target. In the described embodiment the antenna elements of the receiver section have a separation which matches that of transmitter section.

It has been found that by providing this antenna element separation at both the transmitter and the receiver, an improved MIMO diversity can be achieved thus reducing the fluctuations in the signal level at the threshold detector 20.

In the described preferred embodiment the transmitter array and the receiver array are separated by a distance which enables the transmitter and receiver arrays to see a different geographical aspect of the target. It has been found that the preferred distance termed as a bistatic distance must be large such that the angle between transmitter slant range and receiver slant range is greater than 60 degrees. The bistatic separation further improves the MIMO diversity thus reducing the fluctuations in the signal level at the threshold detector 20.

In the first described embodiment the transmitter and receiver arrays are separated by a large distance. This has a drawback that the transmitter and receiver sections are not co-located and require a communication and synchronisation link to bridge the separation.

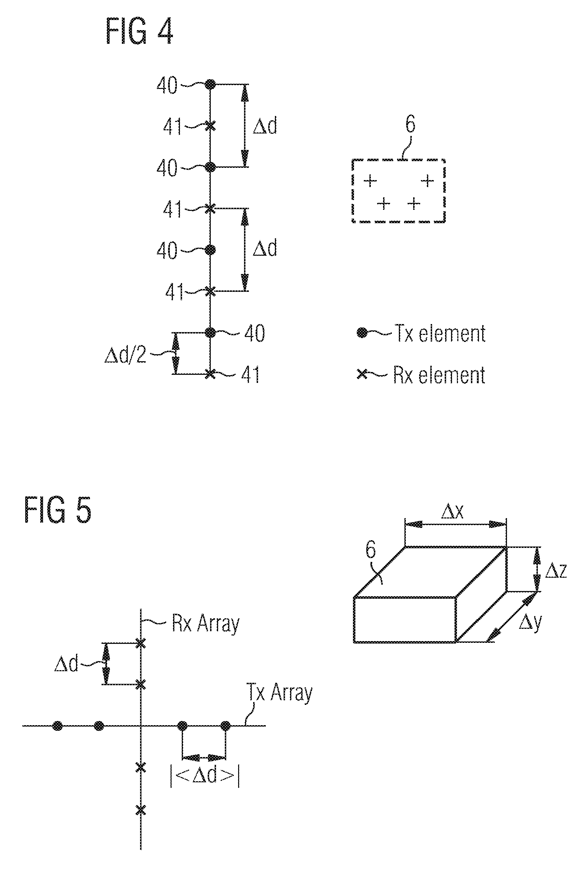

In a second embodiment of the invention shown in figure 4, the transmitter and receiver array elements are nested in a co-planar linear arrangement. The transmitter elements are 40 and the receiver elements are 41. The transmitter array has elements 40 with a separation of $\Delta d$ the same as the separation of the receiver array elements. Adjacent elements of the receiver and the transmitter array have a separation of $\Delta d/2$.

Figure 5 shows a further embodiment of the invention in which the transmit and receive arrays are arranged in substantially mutual orthogonal relationship. The separation $\Delta d$ is then given by the relationship

$$\Delta d > R.\dfrac{\lambda_c}{\min(\Delta x, \Delta y, \Delta z)}$$ where $\Delta x$, $\Delta y$, $\Delta z$ are the target dimensions in the x, y and z directions. Because of the orthogonal arrangement the geometrical observation point for the each of the scatterers in the target is rendered significantly different between the transmitter and the receiver arrays whilst retaining a compact arrangement.

Whilst in the described embodiment of figure 5 the transmit and receive arrays are arranged in substantially mutual orthogonal relationship, they may be located in planes at other angles to each other.

## Claims

1. A Multiple Input Multiple Output RADAR system comprising a transmitter array of transmitting elements and means to provide to the transmitting elements RF signals for illumination of a target; and a receiver array of receiving elements for receiving backscattered RF signals from the target **characterised in that** the elements of both of the transmitter and receiver arrays are spaced apart by a distance $\Delta d$ substantially in accordance with the relationship

$\Delta d > R.\dfrac{\lambda_c}{\Delta t}$ where R is the slant range at which detection is to be made, $\lambda_c$ is the carrier wavelength and $\Delta t$ is a dimension of the target.

2. A system as claimed in claim 1 wherein the transmitter and receiver arrays are provided by alternative receive and transmit elements in a linear array.

3. A system as claimed in claim 1 wherein the transmit and receive arrays are located in planes at an angle with each other.

4. A system as claimed in claim 3 wherein the transmit and receive arrays are located in substantially mutually orthogonal planes.

5. A system as claimed in any preceding claim wherein $\Delta t$ is a minimum dimension of the target in the x, y or z axis.

FIG 1

FIG 2    MIMO radar system

MIMO Radar Transmitter

orthogonal sequence store

8

Codes

9a — PSK modulator    I    Q    11a    13a
9b — PSK modulator    I    Q    11b    13b
9c — PSK modulator    I    Q    11c    13c
9d    PSK modulator    I    Q    11d    13d

10

12    RF 10 GHz

5

6

EP 1 918 734 A1

FIG 3

FIG 4

40 —• ↕ Δd

41 —✕

40 —•

41 —✕ ↕ Δd

40 —•

41 —✕

40 —•
Δd/2 ↕
41 —✕

6

•— Tx element

✕— Rx element

FIG 5

—Rx Array

Δd ↕ ✕

✕

•    •    •    •  —Tx Array

|<Δd>|

✕

✕

Δx

6

Δz

Δy

))) **European Patent**
**Office**

**EUROPEAN SEARCH REPORT**

Application Number

EP 07 11 0771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FISHLER E ET AL: "Mimo radar: an idea whose time has come" RADAR CONFERENCE, 2004. PROCEEDINGS OF THE IEEE PHILADELPHIA, PA, USA APRIL 26-29, 2004, PISCATAWAY, NJ, USA,IEEE, 26 April 2004 (2004-04-26), pages 71-78, XP010711534 ISBN: 0-7803-8234-X | 1,5 | INV. G01S7/41 G01S7/42 G01S13/48 H01Q21/08 |
| Y | * pages 71-73 * ----- | 2-4 | |
| Y | US 4 674 073 A (NARUSE YOSHIHIRO [JP]) 16 June 1987 (1987-06-16) * column 2, lines 43-45; figure 2a * ----- | 2 | |
| Y | US 5 287 330 A (GILMOUR GEORGE A [US]) 15 February 1994 (1994-02-15) * column 2, lines 24-31; figure 1 * ----- | 3,4 | |
| | | | TECHNICAL FIELDS SEARCHED (IPC) G01S |

The present search report has been drawn up for all claims

| Place of search | Date of completion of the search | Examiner |
|---|---|---|
| Munich | 28 February 2008 | Lupo, Emanuela |

EPO FORM 1503 03.82 (P04C01)

**ANNEX TO THE EUROPEAN SEARCH REPORT
ON EUROPEAN PATENT APPLICATION NO.**

EP 07 11 0771

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2008

| Patent document cited in search report | | Publication date | Patent family member(s) | Publication date |
|---|---|---|---|---|
| US 4674073 | A | 16-06-1987 | NONE | |
| US 5287330 | A | 15-02-1994 | NONE | |

EPO FORM P0459

For more details about this annex : see Official Journal of the European Patent Office, No. 12/82